(19) Europäisches Patentamt
European Patent Office
Office européen des brevets

(11) **EP 2 041 523 B1**

(12) **EUROPÄISCHE PATENTSCHRIFT**

(45) Veröffentlichungstag und Bekanntmachung des Hinweises auf die Patenterteilung:
**19.05.2010 Patentblatt 2010/20**

(21) Anmeldenummer: **07764592.7**

(22) Anmeldetag: **08.06.2007**

(51) Int Cl.:
***G01F 1/46*** *(2006.01)*

(86) Internationale Anmeldenummer:
**PCT/EP2007/005082**

(87) Internationale Veröffentlichungsnummer:
**WO 2008/009333 (24.01.2008 Gazette 2008/04)**

(54) **MESSANORDNUNG ZUR STRÖMUNGSMESSUNG IN EINEM KANAL**

MEASURING ARRANGEMENT FOR FLOW MEASUREMENT IN A CHANNEL

DISPOSITIF DE MESURE SERVANT À LA MESURE DU DÉBIT DANS UN CANAL

(84) Benannte Vertragsstaaten:
**DE FR**

(30) Priorität: **18.07.2006 DE 202006011065 U**

(43) Veröffentlichungstag der Anmeldung:
**01.04.2009 Patentblatt 2009/14**

(73) Patentinhaber: **Testo AG**
**79849 Lenzkirch (DE)**

(72) Erfinder:
• **ROMBACH, Martin**
**79853 Lenzkirch (DE)**
• **HUG, Udo**
**78052 Villinge-Schwenningen (DE)**

• **STREICHER, Manfred**
**79853 Lenzkirch (DE)**
• **HALL, Jürgen**
**79877 Rötenbach (DE)**

(74) Vertreter: **Modrow, Stephanie**
**Westphal, Mussgnug & Partner**
**Patentanwälte**
**Am Riettor 5**
**78048 Villingen-Schwenningen (DE)**

(56) Entgegenhaltungen:
**EP-A1- 0 137 623     US-A- 2 352 607**
**US-A- 3 581 565     US-A- 4 546 655**

**Beschreibung**

Die vorliegende Erfindung bezieht sich auf eine Anordnung zur Messung von Strömungsgeschwindigkeiten und Volumenströmen in einem Strömungskanal mit Hilfe einer Staudrucksonde.

Staudrucksonden, auch Pitot-Rohre genannt, sind in der Strömungsmesstechnik weit verbreitete Sensoren zur Bestimmung von Strömungsgeschwindigkeiten. Eine spezielle Form eines PitotRohres ist zum Beispiel das Prandtl'sche Staurohr, welches in der Luftfahrt zur Geschwirdigkeitsmessung verwendet wird. Staudrucksonden kommen jedoch auch in der Lüftungstechnik bei der Messung von Strömungsgeschwindigkeiten, Volumenströmen oder Massenströmen in Lüftungskanälen zum Einsatz, da sie sich durch die Möglichkeit einer einfachen Montage und durch einen geringen Druckverlust im eingebauten Zustand auszeichnen.

Eine bekannte Bauform derartiger Staudrucksonden ist beispielsweise in Figur 1 dargestellt. Die Druckschrift US 3,803,921 zeigt eine ähnliche Staudrucksonde. Ein Sondenrohr 10 ist durch eine Öffnung ins Innere eines Strömungskanals 1 eingeführt. Auf der der Strömung zugewandten Seite des Sondenrohres 10 sind entlang einer Achse des Sondenrohres 10 Öffnungen 11 angeordnet, so dass im Inneren des Sondenrohres ein von der Strömungsgeschwindigkeit vs abhängiger Gesamtdruck pG herrscht. Das Innere des Sondenrohres 10 ist mit einem ersten Anschluss eines Differenzdrucksensors 20 verbunden. Ein zweiter Anschluss des Differenzdrucksensors 20 ist mit einer weiteren Öffnung des Strömungskanals verbunden, welche nicht direkt von der Strömung angeströmt wird. Der zweite Anschluss des Differenzdrucksensors 20 liegt somit auf einem Druckniveau, welches dem statischen Druck po im Inneren des Strömungskanals entspricht. Die Druckdifferenz $p_S = p_G - p_O$ wird als Staudruck oder als dynamischer Druck bezeichnet. Aus dem Staudruck $p_S$ lässt sich in einfacher Weise die Strömungsgeschwindigkeit $v_S$ wie folgt berechnen:

$$v_S = \sqrt{\frac{2 \cdot p_S}{\rho}} \qquad\qquad (1)$$

Das Symbol $\rho$ bezeichnet dabei die Dichte des strömenden Mediums. Obiger Zusammenhang folgt unmittelbar aus der Bernoulli-Gleichung.

Die Strömungsgeschwindigkeit $v_S$ ist normalerweise nicht konstant über dem Querschnitt des Strömungskanals. Da das Sondenrohr 10 entlang seiner Längsachse mehrere Öffnungen 11 aufweist, wird ein mittlerer Staudruck $p_S$ und daraus eine mittlere Strömungsgeschwindigkeit $v_S$ im Strömungskanal 10 ermittelt. Eine derartige Messung der mittleren Strömungsgeschwindigkeit ist jedoch zu ungenau und eine Einbeziehung des jeweiligen Strömungsprofils in das Messergebnis ist notwendig. Bisher wird dieses Problem so gelöst, dass die Staudrucksonden individuell für jeden möglichen Kanalquerschnitt angepasst und kalibriert werden. Bei fest eingebauten Staudrucksonden ist dies nur ein geringes Problem, bei mobilen Messungen mit tragbaren Betriebskontrollmessgeräten wäre jedoch für jeden möglichen Kanalquerschnitt ein dafür angepasstes Sondenrohr notwendig, was für mobile Anwendungen nicht praktikabel ist. Es wäre eine Unzahl verschiedener Sonden - nämlich eine für jeden möglichen Kanalquerschnitt - notwendig.

Demnach ist es die Aufgabe der vorliegenden Erfindung, eine Messanordnung zur Bestimmung der Strömungsgeschwindigkeit in einem Strömungskanal anzugeben, welche geeignet ist, in beliebigen Rohrdurchmessern die Strömungsgeschwindigkeit ausreichend genau zu messen.

Diese Aufgabe wird durch eine Messanordnung nach Anspruch 1 gelöst. Verschiedene Ausführungsformen und Weiterbildungen, sowie ein Verfahren zur Verwendung der Messanordnung sind Gegenstand der abhängigen Ansprüche.

Anders als im Stand der Technik wird bei der vorliegenden Erfindung das Problem des Einflusses des Strömungsprofils über den Querschnitt des Strömungskanals auf das Messergebnis für die mittlere Strömungsgeschwindigkeit nicht dadurch gelöst, dass eine Staudrucksonde speziell für einen bestimmten Kanalquerschnitt angepasst und kalibriert wird, sondern dadurch, dass die Staudrucksonde dahingehend weiterentwickelt wird, dass auch eine Messung des Strömungsprofils möglich wird, und somit das Messergebnis für das Strömungsprofil auch in die Berechnung der mittleren Strömungsgeschwindigkeit einfließen kann.

Die erfindungsgemäße Messanordnung zur Bestimmung von Strömungsgeschwindigkeiten in einem Strömungskanal umfasst neben dem Strömungskanal ein Sondenrohr, mit mehreren entlang einer Linie parallel zu einer Längsachse des Sondenrohres angeordneten Öffnungen und einen Differenzdrucksensor. Das Sondenrohr ist durch eine erste Öffnung in das Innere des Strömungskanals derart eingeführt, dass die Öffnungen im Sondenrohr der Strömung im Strömungskanal zugewandt sind. Sämtliche der Strömung zugewandten Öffnungen führen in das Innere des Sondenrohres, wo ein von der Anströmgeschwindigkeit abhängiger Gesamtdruck (statischer Druck plus Staudruck) herrscht.

Der Differenzdrucksensor weist einen ersten Anschluss auf, der mit dem Inneren des Sondenrohres verbunden ist. Ein zweiter Anschluss des Differenzdrucksensors ist über eine Öffnung mit dem Strömungskanal derart verbunden, dass an jenem zweiten Anschluss der statische Druck im Inneren des Strömungskanals anliegt. Diese Öffnung darf deshalb nicht von der Strömung im Kanal angeströmt werden und muss mit ihrem Querschnitt parallel zu den Stromlinien liegen. Der vom Differenzdrucksensor gemessene Differenzdruck entspricht genau dem Staudruck bzw. dem dynamischen Druck im Inneren der Sonde.

Das Sondenrohr ist darüber hinaus zumindest teilweise mit einer verschiebbaren und/oder in ihrer Länge veränderbaren Abschirmung umgeben, welche dazu ausgebildet ist, je nach Position und/oder Länge der Abschirmung entlang des Sondenrohres keine, eine oder mehrere Öffnungen zu verschließen oder zu verdecken.

Nach dem Einführen der Sonde in den Strömungskanal kann nicht nur ein mittlerer Staudruckwert gemessen werden, sondern auch eine ganze Messreihe mit soviel Einzeldruckmessungen, wie Öffnungen in dem Sondenrohr vorhanden sind. Dabei wird jede Messung der Messreihe mit einer unterschiedlichen Anzahl angeströmter Öffnungen durchgeführt. Jene Öffnungen, welche nicht angeströmt werden sollen, müssen dabei von der Abschirmung verdeckt werden. Die Sonde kann bei einer Messung nur teilweise in den Strömungskanal eingeführt werden. Dabei ist die Abschirmung so angeordnet, dass die nicht im Strömungskanal befindlichen Öffnungen von der Abschirmung verdeckt werden und die im Kanal befindlichen Öffnungen angeströmt werden. In diesem Fall ist die Abschirmung also nur außerhalb des Kanals. Die Sonde kann aber auch vollständig in den Kanal eingeführt werden. In diesem Fall muss natürlich auch die Abschirmung zumindest teilweise im Kanal angeordnet sein, um dort je nach Länge und Position der Abschirmung eine unterschiedliche Anzahl von Öffnungen zu verdecken.

Bei der ersten Differenzdruckmessung der Messreihe ist nur eine erste Öffnung im Sondenrohr unverschlossen und frei anströmbar. Vor der zweiten Differenzdruckmessung wird eine zweite Öffnung im Sondenrohr (beispielsweise eine Öffnung, welche der bereits offenen ersten Öffnung unmittelbar benachbart ist) freigelegt, sodass bei der zweiten Messung zwei (beispielsweise benachbarte) Öffnungen angeströmt werden und der mittlere Staudruck im Inneren des Sondenrohres sich entsprechend verändert. Vor jeder weiteren Messung wird eine weitere Öffnung im Sondenrohr, welche zuvor durch die Abschirmung verschlossen war, freigelegt (beispielsweise jene Öffnung, die zu der gerade zuvor freigelegten Öffnung unmittelbar benachbart ist). Dieser Vorgang wird solange fortgesetzt, bis alle Öffnungen im Sondenrohr unverschlossen und frei anströmbar sind. Der Vorgang kann selbstverständlich genauso gut in der umgekehrten Reihenfolge durchgeführt werden, d. h. alle Öffnungen im Sondenrohr werden bei der ersten Messung angeströmt und bei den folgenden Messungen werden sukzessiv eine Öffnung nach der anderen durch die Abschirmung abgedeckt, bis nur mehr eine Öffnung frei anströmbar ist und zum mittleren Druck im Sondenrohr beiträgt. Die Reihenfolge, in der die Öffnungen verdeckt oder freigelegt werden ist für das Ergebnis nicht relevant. Aus praktischen Gründen werden die Öffnungen jedoch meist der Reihe nach verdeckt bzw. freigelegt.

Die Veränderung des mittleren Staudrucks im Inneren des Sondenrohres beim sukzessiven Öffnen bzw. Verschließen der Öffnungen im Sondenrohr beinhaltet Informationen über das Strömungsprofil über den Querschnitt des Strömungskanals. Aus der gemessenen Reihe von Staudruckwerten kann die Form des Strömungsprofils ermittelt werden.

Ein wesentlicher Aspekt der Erfindung ist die Gestaltung der Abschirmung. Diese kann als Faltenbalg oder Teleskoprohr variabler Länge gestaltet sein, welcher oder welches dem Sondenrohr übergestülpt wird und je nach seiner Position und/oder Länge keine, eine oder mehrere benachbarte Öffnungen im Sondenrohr überdeckt, so dass sie nicht mehr angeströmt werden können. Eine weitere Möglichkeit ist die Verwendung eines zweiten Rohres, welches ebenfalls dem Sondenrohr übergestülpt wird und welches Öffnungen aufweist, die sich je nach Position der Abschirmung mit den Öffnungen im Sondenrohr überlappen und diese positionsabhängig freigeben oder verschließen können. In diesem Fall kann statt einem Rohr auch eine Schiene verwendet werden, welche auf der der Strömung zugewandten Seite am Sondenrohr angeordnet ist.

Um als universelle Parametersonde einsetzbar zu sein, können bei der erfindungsgemäßen Messanordnung am Sondenrohr auch Feuchtigkeits- und Temperatursensoren angeordnet sein.

Im Folgenden wird die Erfindung anhand von in den Figuren dargestellten Ausführungsbeispielen näher erläutert. Es zeigt:

Figur 1    eine Messanordnung mit einer Staudrucksonde gemäß dem Stand der Technik,

Figur 2a    eine erfindungsgemäße Staudrucksonde mit einem Te- leskoprohr als Abschirmung,

Figur 3    eine erfindungsgemäße Staudrucksonde mit einem Fal- tenbalg als Abschirmung,

Figur 4    eine erfindungsgemäße Staudrucksonde mit einem Rohr als Abschirmung, welches ebenfalls Öffnungen auf- weist, die sich mit den Öffnungen im Sondenrohr po- sitionsabhängig überlappen.

Figur 5    eine erfindungsgemäße Staudrucksonde ähnlich wie in Figur 3, jedoch mit einem in zwei Kammern geteilten Innenraum zur gleichzeitigen Erfassung des stati- schen Drucks.

Figur 6a   Diagramm mit einer nach dem erfindungsgemäßen Ver- fahren aufgezeichneten Messreihe der Staudrücke in Abhängigkeit der frei anströmbaren Öffnungen im Sondenrohr

Figur 6b   Diagramm mit den aus der Messreiche aus Figur 6a be- rechneten Werten, welche proportional zum Strö- mungsprofil über den Kanalquerschnitt sind.

In den Figuren bezeichnen gleiche Bezugszeichen gleiche Teile.

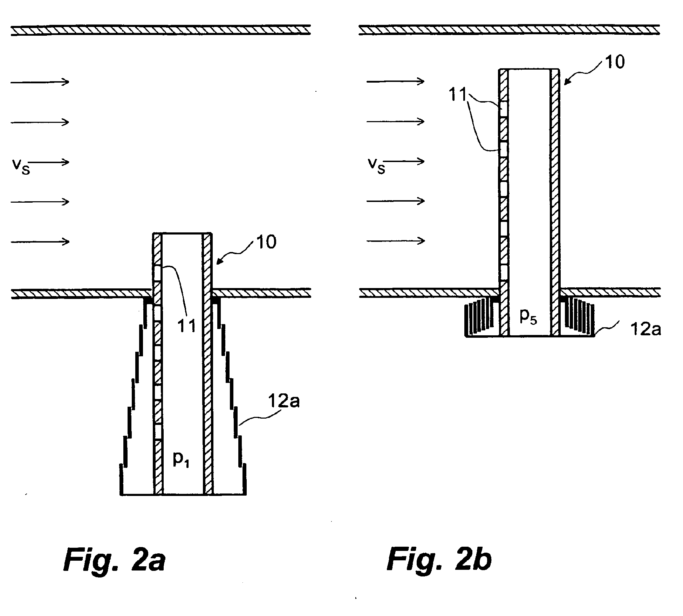

Die Figuren 2a und 2b zeigen einen Teil der erfindungsgemäßen Messanordnung, nämlich ein Sondenrohr 10 mit Öffnungen 11, welche entlang einer Linie parallel zur Symmetrieachse auf der der Strömung zugewandten Seite angeordnet sind, und mit einem Teleskoprohr 12a, welches dem Sondenrohr übergestülpt ist und welches geeignet ist, je nach der eingestellten Position und Länge keine, eine oder mehrere aufeinanderfolgende Öffnungen abzudecken. Das Sondenrohr 11 kann unterschiedlich weit in den Kanal einführt werden, je nachdem wie die Länge des Teleskoprohres 12a eingestellt ist. In der Figur 2a ist das Teleskoprohr in einer ausgefahrenen Position dargestellt, in der alle bis auf eine einzige Öffnung im Sondenrohr von dem Teleskoprohr abgedeckt sind. Nur eine einzige Öffnung befindet sich im Strömungskanal. Zur Bildung des Gesamtdrucks $p_1$ im Inneren des Sondenrohres trägt also nunmehr die eine verbliebene Öffnung im Kanal bei. Je nach Position des Teleskoprohrs 12a kann nun eine beliebige Anzahl von Öffnungen 11 geöffnet bzw. verschlossen werden. Nur die offenen und daher frei anströmbaren Öffnungen 11 tragen zur Bildung des Gesamt- drucks $p_1$, $p_2$, etc. bei. Die Figur 2b zeigt das Teleskoprohr in einer eingefahrenen Position, in der es seine geringste Länge aufweist und in der es keines der Öffnungen 11 abdeckt, so dass alle Öffnungen 11 sich im Kanal befinden, von der Strömung frei anströmbar sind und zur Bildung eines mittleren Gesamtdruckes $p_5$ im inneren des Sondenrohres 10 beitragen. Der Index "5" bei dem Symbol für den Gesamtdruck $p_5$ weist daraufhin, dass bei der Messung fünf Öffnungen 11 im Sondenrohr bei der Messung angeströmt wurden.

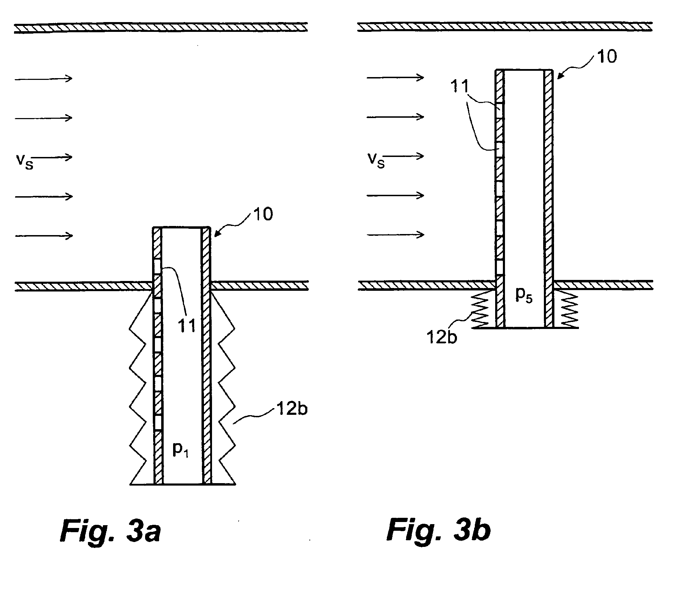

Die Figuren 3a und 3b entsprechen im Wesentlichen den Figuren 2a und 2b, jedoch wird als Abschirmung statt einem Teleskoprohr 12a ein Faltenbalg 12b verwendet. Der Faltenbalg 12b kann sich beispielsweise um das 20- fache seiner Minimallänge verlängern und ist so sehr gut geeignet, eine variable Zahl von Öffnungen 11 im Sondenrohr abzudecken und vor der Strömung abzuschirmen.

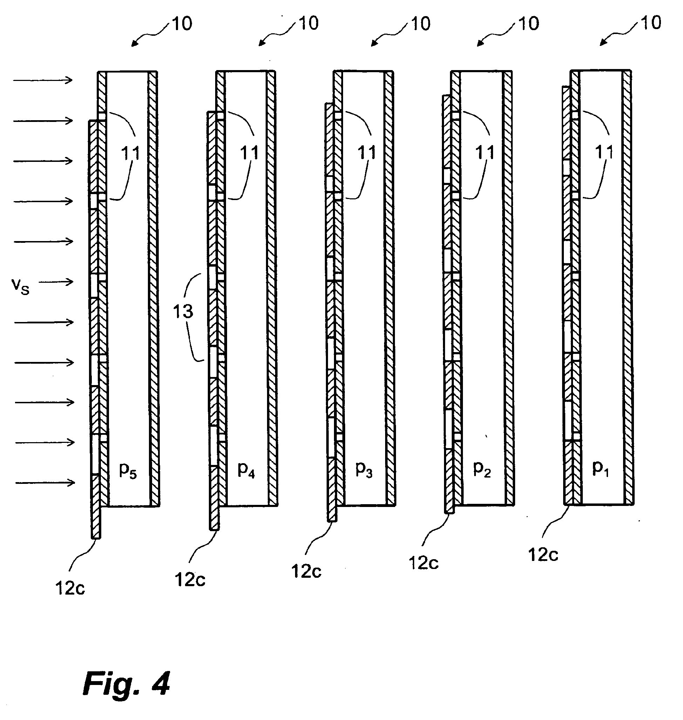

In der Figur 4 ist eine weitere Ausführungsform des erfindungsgemäßen Sondenrohres mit Abschirmung dargestellt, die sich von den anderen Ausführungsformen dadurch unterscheidet, dass das Sondenrohr 10 beim Durchführen einer Messreihe immer ganz in den Kanal eingeführt ist. In diesem Fall wird die - ebenfalls im Kanal befindliche - Abschirmung durch ein weiteres Rohr gebildet, welches dem Sondenrohr übergestülpt ist. Bei einer alternativen Ausführungsform könnte statt dem weiteren Rohr auch lediglich eine Schiene auf der der Strömung abgewandten Seite am Sondenrohr angeordnet sein. Das weitere Rohr 12c bzw. die Schiene weisen ebenfalls Öffnungen 13 auf, welche derart gestaltet und derart angeordnet sind, dass je nach Position des weiteren Rohres sich entweder sämtliche Öffnungen 13 des weiteren Rohres und sämtliche Öffnungen 11 des Sondenrohres überlappen und damit frei von der Strömung anströmbar sind, oder auch eine beliebige Anzahl von Öffnungen 11 des Sondenrohres von dem weiteren Rohr verdeckt werden. Je nach Position des weiteren Rohres 12c wird auch bei dieser Ausführungsform keine, eine oder auch mehrere aufeinanderfolgende Öffnungen 11 im Sondenrohr von dem weiteren Rohr 12c verdeckt. In der Figur 4 sind schematisch für ein Sondenrohr mit fünf Öffnungen 11 fünf unterschiedliche Positionen des weiteren Rohres 12c dargestellt, so dass je nach Position des weiteren Rohres 12c fünf, vier, drei, zwei oder nur eine einzige Öffnung 11 im Sondenrohr unverdeckt und frei von der Strömung anströmbar ist. Die dazugehörigen Gesamtdrücke im Inneren des Sondenrohres entsprechen den Drücken $p_5$ bis $p_1$.

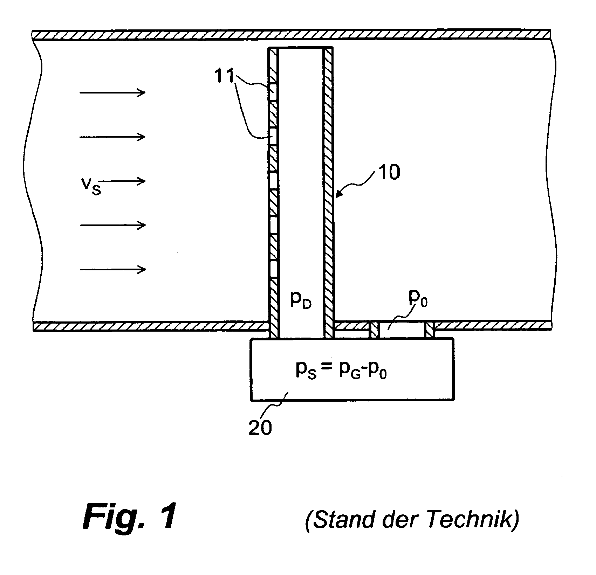

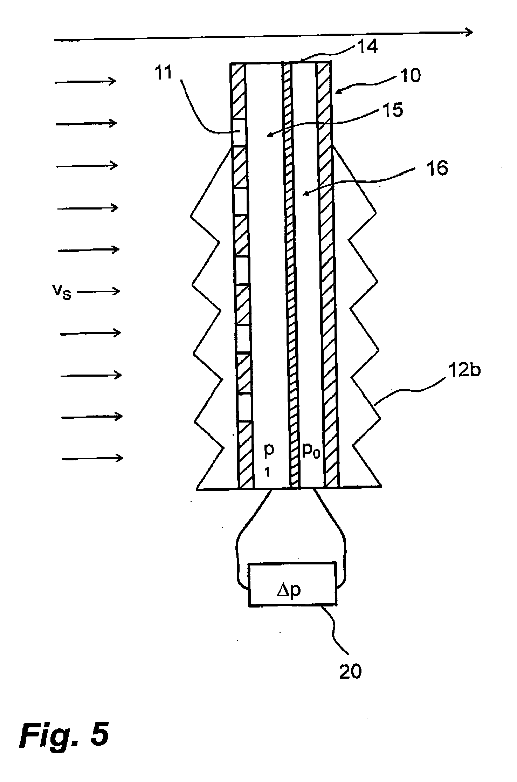

In Figur 5 ist nochmals das in Figur 3 dargestellte Sondenrohr mit Faltenbalken gezeigt, jedoch weist das Innere des Sondenrohres in diesem Falle zwei Kammern 15 und 16 auf, wobei sämtliche Öffnungen 11 in eine erste Kammer 15 führen und eine zweite Kammer 16 lediglich über eine einzige Öffnung 14 mit dem Strömungskanal verbunden ist. Diese Öffnung 14 ist jedoch so angeordnet, dass sie nicht direkt von der Strömung angeströmt wird, also parallel zu den Stromlinien liegt, beispielsweise in der Deckfläche eines zylindrischen Sondenrohres. Bei einer entsprechenden Strömung wird sich in der ersten Kammer 15 wieder ein Gesamtdruck $p_1$, $p_2$, etc. einstellen, der sich aus der Summe des strömungsabhängigen Staudruckes und dem statischen Druck berechnet. In der zweiten Kammer 16 wird sich lediglich der statische Druck $p_0$ einstellen, da durch die Öffnung 14, mit der die Kammer 16 mit dem Strömungskanal verbunden ist, nicht angeströmt wird. Diese Anordnung hat den Vorteil, dass Gesamtdruck $p_1$, $p_2$, etc. und statischer Druck $p_0$ in dem selben Sondenrohr gemessen werden können und zur Messung des statischen Druckes $p_0$ keine eigene Öffnung im Strömungskanal notwendig ist, wie es in Figur 1 zum Stand der Technik gezeigt ist.

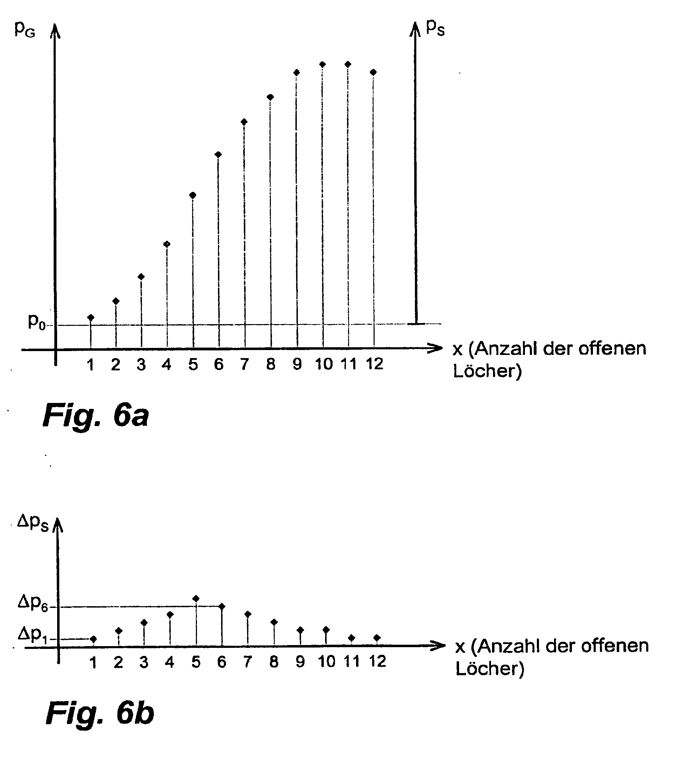

Die Figur 6a zeigt exemplarisch (nicht maßstabsgetreu) den Verlauf einer Messreihe wie er bei einem erfindungsgemäßen Messvorgang ermittelt wird. Bei einem durch die Abschirmung vorerst vollständig verschlossenen Sondenrohr wird durch manuelles Verschieben der Abschirmung oder des Sondenrohres (wodurch wiederum die Abschirmung verschoben und/oder gestaucht bzw. gestreckt wird) Schritt für Schritt eine Öffnung im Sondenrohr nach der anderen freigegeben und nach der Freigabe der betreffenden Öffnung wird der Staudruck als Differenzdruck zwischen dem Gesamtdruck im Inneren des Sondenrohres und dem statischen Druck ermittelt. Bei einem Sondenrohr mit n Öffnungen 11 erhält man somit bei einem Messvorgang n Einzelmesswerte $p_n$.

Aus dieser Messreihe lässt sich leicht die Form des Strömungsprofils ermittelt. Eine zum Strömungsprofil proportionale Reihe von Einzelpunkt-Staudruckwerten $\Delta p_n$ erhält man durch Subtraktion des Produktes aus dem aktuell gemessenen Staudruck und der Anzahl der bei der aktuellen Messung nicht abgedeckten Öffnungen vom Produkt aus dem zuvor gemessenen Staudruck und der Anzahl der dabei nicht abgedeckten Öffnungen. Werden also bei der n-ten Messung der Messreihe n Öffnungen angeströmt ist der Einzelpunkt-Staudruck

$$\Delta p_n = p_n \cdot n - p_{n-1} \cdot (n-1) \qquad \text{für } i > 1. \qquad (2)$$

Bei der ersten Messung bei nur einer angeströmten Öffnung im Sondenrohr ist der Einzelpunkt-Staudruck $\Delta p_1$ natürlich gleich dem mittleren Staudruck $p_1$.

$$\Delta p_1 = p_1 \qquad (3)$$

Die den Einzelpunkt-Staudruckwerten $\Delta p_n$ entsprechenden Werte für die gesuchte lokale Strömungsgeschwindigkeit $v_n$ erhält man dann analog zu Gleichung (1) gemäß der Formel

$$v_n = \sqrt{\frac{2 \cdot \Delta p_n}{\rho}} \ . \qquad (4)$$

Die Ortsauflösung für das Strömungsprofil entspricht genau dem Abstand zwischen den Öffnungen.

Aus der Form eines derart ermittelten Strömungsprofils lässt sich leicht eine mittlere Strömungsgeschwindigkeit im Strömungskanal oder auch der Volumen- oder Massenstrom berechnen.

**Patentansprüche**

1. Messanordnung zur Bestimmung von Strömungsgeschwindigkeiten in einem Strömungskanal mit - einem Strömungskanal (1),

   - einen Sondenrohr (10) , das durch eine erste Öffnung in das Innere des Strömungskanals (1) eingeführt, dort einer Strömung mit einer Strömungsgeschwindigkeit ($v_S$) ausgesetzt ist und die auf der der Strömung zugewandten Seite des Sondenrohrs (10) mehrere Öffnungen (11) aufweist, die im Inneren des Sondenrohrs (10) miteinander verbunden sind, sodass im Inneren des Sondenrohrs (10) ein von der Strömungsgeschwindigkeit abhängiger Gesamtdruck ($p_G$; $p_1$; $p_5$) herrscht,
   - einen Differenzdrucksensor (20) , welcher dazu ausgebildet ist, den Differenzdruck ($p_S$) zwischen dem Gesamtdruck ($p_G$; $p_1$; $p_S$) im Inneren der Sonde und einem statischen Druck (p0) im Strömungskanal (1) zu bestimmen,

   **dadurch gekennzeichnet, dass** das Sondenrohr (10) zumindest teilweise mit einer verschiebbaren und/oder in ihrer Länge veränderbaren Abschirmung (12a; 12b) umgeben ist, welche dazu ausgebildet ist, je nach Position und/oder Länge der Abschirmung (12a; 12b; 12c) entlang des Sondenrohrs (20) keine, eine oder mehrere Öffnungen (11) zu verschließen.

2. Messanordnung nach Anspruch 1, bei der die Abschirmung als Faltenbalg (12b) ausgebildet ist.

3. Messanordnung nach Anspruch 1, bei der die Abschirmung als Teleskoprohr (12a) ausgebildet ist.

4. Messanordnung nach einem der vorangehenden Ansprüche, bei der das Sondenrohr (10) nur teilweise in das Innere des Strömungskanals (1) eingeführt ist und die Abschirmung (12a; 12b) die außerhalb des Strömungskanals (1) befindlichen Öffnungen (11) abdeckt.

5. Messanordnung nach Anspruch 1, bei der die Abschirmung als verschiebbares Rohr oder als verschiebbare Schiene (12c) ausgebildet ist, welche Öffnungen (13) aufweisen, die derart angeordnet sind, dass, ausgehend von einer ersten Position der Abschirmung, in der die Öffnungen (13) die Öffnungen (11) des Sondenrohrs (10) überlappen, bei einer Verschiebung der Abschirmung eine Öffnung (11) des Sondenrohrs nach der anderen von der Abschirmung verschlössen wird.

6. Messanordnung nach einem Ansprüche 1 bis 5, bei der Differenzdrucksensor (20) über eine zweite Öffnung direkt mit dem Kanal verbunden ist, um den statischen Druck im Strömungskanal (1) zu erfassen.

7. Messanordnung nach einem Ansprüche 1 bis 5, bei das Sondenrohr (10) eine erste Kammer (10a) , welche über die Öffnungen (11) mit dem Strömungskanal verbunden und dem Gesamtdruck ($p_1$; $p_2$; $p_3$; $p_4$ ; $p_5$) ausgesetzt ist, und eine zweite Kammer (10b) , welche über eine Öffnung (14) an der Stirnseite des Sondenrohrs (10) mit dem Strömungskanal verbunden und dem statischen Druck ($p_0$) ausgesetzt ist, aufweist.

8. Messanordnung nach Anspruch 7, bei der der Differenz-drucksensor (20) mit dem Sondenrohr derart verbunden ist, dass er die Differenz zwischen dem Gesamtdruck ($p_1$; $p_2$; $p_2$; $p_4$ ; $p_5$) in der ersten Kammer und dem statischen Druck ($p_0$) in der zweiten Kammer des Sondenrohrs (10) misst.

9. Verfahren zur Messung des Strömungsprofils in einem Strömungskanal (1) mit Hilfe einer Messanordnung nach einem der Ansprüche 1 bis 8,
   **dadurch gekennzeichnet, dass** ausgehend von einem Grundzustand, in dem alle Öffnungen (11) des Sondenrohrs geöffnet sind, sukzessive eine Öffnung (11) des Sondenrohrs nach der anderen durch Verschieben der Abschirmung (12a; 12b; 12c) verschlossen wird.

10. Verfahren zur Messung des Strömungsprofils in einem Strömungskanal (1) mit Hilfe einer Messanordnung nach einem der Ansprüche 1 bis 8,
    **dadurch gekennzeichnet, dass** ausgehend von einem Grundzustand, in dem nur eine der Öffnungen (11) des Sondenrohrs (10) unverschlossen ist, sukzessive eine Öffnung (11) des Sondenrohrs nach der anderen durch Verschieben der Abschirmung (12a; 12b; 12c) oder des Sondenrohres freigelegt wird.

11. Verfahren nach einem der Ansprüche 9 oder 10, bei dem eine Messreihe von Druckwerten aufgenommen wird, wobei ein neuer Messwert für den Differenzdruck ($p_S$) dann aufgenommen wird, wenn eine weitere Öffnung (11) des Sondenrohrs (10) verschlossen oder freigelegt worden ist.

12. Verfahren nach Anspruch 11, bei dem aus der Messreihe ein Strömungsprofil berechnet wird.

**Claims**

1. Measuring arrangement for determining flow rates in a flow channel, comprising;

   - a flow channel (1),
   - a probe tube (10) which is introduced into the interior of the flow channel (1) through a first opening, is exposed therein to a flow having a flow rate ($v_S$) and has a plurality of openings (11) on the side of the probe tube (10) facing towards the flow, said openings being connected to one another in the interior of the probe tube (10) so that a total pressure ($p_G$; $p_1$; $p_5$) dependent on the flow rate prevails in the interior of the probe tube (10),
   - a differential pressure sensor (20) which is designed to determine the differential pressure ($p_S$) between the total pressure ($p_G$; $p_1$; $p_5$) in the interior of the probe and a static pressure (p0) in the flow channel (1),

   **characterised in that**
   the probe tube (10) is surrounded at least partially by a displaceable and/or length-variable shield (12a; 12b) which is designed to close one or more openings (11) depending on the position and/or length of the shield (12a; 12b; 12c) along the probe tube (10).

**2.** Measuring arrangement according to claim 1, in which the shield is designed as a bellows (12b).

**3.** Measuring arrangement according to claim 1, in which the shield is designed as a telescopic tube (12a).

**4.** Measuring arrangement according to one of the preceding claims, in which the probe tube (10) is introduced only partially into the interior of the flow channel (1) and the shield (12a; 12b) covers the openings (11) located outside the flow channel (1).

**5.** Measuring arrangement according to claim 1, in which the shield is designed als a displaceable tube or as a displaceable rail (12c), which have openings (13) arranged in such a way that, starting from a first position of the shield, in which the openings (13) overlap the openings (11) of the probe tube (10), one opening (11) of the probe tube after another is closed by the shield during a displacement of the shield.

**6.** Measuring arrangement according to one of claims 1 to 5, in which the differential pressure sensor (20) is connected directly to the channel via a second opening in order to detect the static pressure in the flow channel (1)

**7.** Measuring arrangement according to one of claims 1 to 5, in which the probe tube (10) has a first chamber (10a) which is connected to the flow channel via the openings (11) and is exposed to the total pressure ($p_1$; $p_2$; $p_3$; $p_4$; $p_5$), and a second chamber (10b) which is connected to the flow channel via an opening (14) on the end face of the probe tube (10) and is exposed to the static pressure ($p_0$).

**8.** Measuring arrangement according to claim 7, in which the differential pressure sensor (20) is connected to the probe tube in such a way that it measures the difference between the total pressure ($p_1$; $p_2$; $p_3$; $p_4$; $p_5$) in the first chamber and the static pressure ($p_0$) in the second chamber of the probe tube (10).

**9.** Method for measuring the flow profile in a flow channel (1) using a measuring arrangement according to one of claims 1 to 8, **characterised in that,** starting from a basic state in which all the openings (11) of the probe tube are open, one opening (11) of the probe tube after another is successively closed by displacement of the shield (12a; 12b; 12c).

**10.** Method for measuring the flow profile in a flow channel (1) using a measuring arrangement according to one of claims 1 to 8, **characterised in that,** starting from a basic state in which only one of the openings (11) of the probe tube (10) is not closed, one opening (11) of the probe tube after another is successively exposed by displacement of the shield (12a; 12b; 12c) or of the probe tube.

**11.** Method according to one of claims 9 or 10, in which a measurement series of pressure values is recorded, wherein a new measured value for the differential pressure ($p_S$) is recorded whenever a further opening (11) of the probe tube (10) has been closed or exposed.

**12.** Method according to claim 11, in which a flow profile is calculated from the measurement series.

**Revendications**

**1.** Dispositif de mesure pour déterminer la vitesse d'écoulement dans un canal comprenant :

- un canal (1),
- un tube de sonde (10) introduit à travers une première ouverture à l'intérieur du canal (1) pour être exposé à un écoulement à une vitesse (vs), le côté du tube de sonde (10) tourné vers l'amont comportant plusieurs orifices (11) reliés entre eux à l'intérieur du tube de sonde (10) de façon qu'il règne à l'intérieur du tube de sonde (10), une pression totale (pG; p1; ps) dépendant de la vitesse de l'écoulement,
- un capteur de pression différentielle (20) pour déterminer la différence de pression (ps) entre la pression totale (pG; p1; ps) à l'intérieur de la sonde et une pression statique (p0) dans le canal (1),

**caractérisé en ce que**
le tube de sonde (10) est entouré au moins en partie d'un écran (12a; 12b) coulissant et/ou de longueur variable, cet écran (12a; 12b; 12c) étant réalisé de façon qu'il ferme une ou plusieurs ouvertures (11) suivant sa position et/ou sa longueur le long du tube de sonde (10).

**2.** Dispositif de mesure selon la revendication 1,
selon lequel
l'écran est réalisé sous la forme d'un soufflet (12b).

**3.** Dispositif de mesure selon la revendication 1,
selon lequel
l'écran est réalisé sous la forme d'un tube télescopique (12a).

**4.** Dispositif de mesure selon l'une des revendications précédentes,
selon lequel
le tube de sonde (10) ne s'introduit que partiellement à l'intérieur du canal d'écoulement (1) et l'écran (12a; 12b) couvre les ouvertures (11) à l'extérieur du canal d'écoulement (1).

**5.** Dispositif de mesure selon la revendication 1,
selon lequel
l'écran est un tube coulissant ou un rail susceptible d'être fermé (12c), comportant des ouvertures (13) disposées pour que partant d'une première position de l'écran, dans laquelle les ouvertures (13) chevauchent les ouvertures (11) du tube de sonde (10), par coulissement de l'écran, celui-ci ferme une ouverture (11) après l'autre du tube de sonde.

**6.** Dispositif de mesure selon l'une des revendications 1 à 5,
selon lequel
le capteur de pression différentielle (20) est relié directement au canal par l'intermédiaire d'une seconde ouverture pour saisir la pression statique dans le canal d'écoulement (1).

**7.** Dispositif de mesure selon l'une des revendications 1 à 5,
selon lequel
le tube de sonde (10) comporte une première chambre (10a) reliée au canal par les ouvertures (11) et exposée à la pression totale (p1; p2; p3; p4; p5), et une seconde chambre (10b) reliée au canal par une ouverture (14) de la face frontale du tube de sonde (10) et exposée à la pression statique (p0).

**8.** Dispositif de mesure selon la revendication 7,
selon lequel
le capteur de pression différentielle (20) est relié au tube de sonde de façon à mesurer la différence entre la pression totale (p1; p2; p3; p4; p5) dans la première chambre et la pression statique (p0) dans la seconde chambre du tube de sonde (10).

**9.** Procédé de mesure du profil d'écoulement d'un canal (1) à l'aide d'un dispositif de mesure selon l'une des revendications 1 à 8,
**caractérisé en ce que**
partant d'un état de base pour lequel toutes les ouvertures (11) du tube de sonde sont ouvertes, on ferme successivement l'une après l'autre les ouvertures (11) après l'autre du tube de sonde par coulissement de l'écran (12a; 12b; 12c).

**10.** Procédé de mesure du profil d'écoulement d'un canal (1) à l'aide d'un dispositif de mesure selon l'une des revendications 1 à 8,
**caractérisé en ce que**
partant d'un état de base dans lequel seulement l'une des ouvertures (11) du tube de sonde (10) n'est pas fermée, on dégage successivement une ouverture (11) du tube de sonde après l'autre en coulissant l'écran (12a; 12b; 12c) ou le tube de sonde.

**11.** Procédé selon la revendication 9 ou 10,
selon lequel
on reçoit une série de mesures de valeurs de pression et on prend une nouvelle valeur de mesure pour la pression différentielle (ps) lorsqu'une autre ouverture (11) du tub de sonde (10) est fermée ou est dégagée.

**12.** Procédé selon la revendication 11,
selon lequel

on calcule un profil d'écoulement à partir de la série de mesures.

**Fig. 1**          (Stand der Technik)

$v_s$

$p_1$

10

11

12a

**Fig. 2a**

$v_s$

10

11

$p_5$

12a

**Fig. 2b**

**Fig. 3a**

**Fig. 3b**

*Fig. 4*

**Fig. 5**

**Fig. 6a**

**Fig. 6b**

**EP 2 041 523 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3803921 A